# EUROPÄISCHE PATENTSCHRIFT

(11) **EP 1 200 807 B1**
(45) Veröffentlichungstag und Bekanntmachung des Hinweises auf die Patenterteilung: **10.11.2004**
(21) Anmeldenummer: 00934841.8
(22) Anmeldetag: 21.06.2000
(51) Int. Cl.: G01G 21/23, B66B 1/34

(54) **LASTMESSEINRICHTUNG FÜR EIN LASTAUFNAHMEMITTEL EINES AUFZUGS**
LOAD-MEASURING DEVICE FOR A LOAD-BEARING ELEMENT OF AN ELEVATOR
DISPOSITIF DE MESURE DE CHARGE POUR ELEMENT DE SUSPENSION DE CHARGE D'UN ASCENSEUR

(30) Priorität: 30.07.1999 CH 141499
(43) Veröffentlichungstag der Anmeldung: 02.05.2002
(73) Patentinhaber: INVENTIO AG, CH-6052 Hergiswil (CH)
(72) Erfinder: WIRTH, Johannes, CH-8032 Zürich (CH); BAUMGARTNER, Urs, CH-5634 Merenschwand (CH)
(86) Internationale Anmeldenummer: PCT/CH2000/000337
(87) Internationale Veröffentlichungsnummer: WO 2001/009575

(56) Entgegenhaltungen:
- EP-A- 0 151 949
- DE-A- 2 929 137
- FR-A- 2 433 173
- US-A- 4 078 623
- US-A- 4 601 356

## Beschreibung

Vorliegende Erfindung bezieht sich auf eine Lastmesseinrichtung eines Lastaufnahmemittels eines Aufzugs, bei der die auf den Boden des Lastaufnahmemittels wirkende Last die Durchbiegung mindestens eines elastischen Elements des Lastaufnahmemittels bewirkt, wobei mindestens ein Biegungs-Sensor diese Durchbiegung erfasst und ein lastabhängiges Signal erzeugt.

Lastmesseinrichtungen für Lastaufnahmemittel von Aufzügen haben die Aufgabe, eine Aufzugsfahrt mit unzulässig hoher Last zu verhindern und der Aufzugsteuerung Informationen zu liefern, die ihr ermöglichen, abhängig vom momentanen Belastungszustand des Lastaufnahmemittels in geeigneter Weise auf Rufbefehle durch Aufzugsbenutzer zu reagieren.

EP 0 151 949 offenbart eine Lastmesseinrichtung für einen Aufzugs-Fahrstuhl, die auf dem Prinzip beruht, dass die gesamte Aufzugskabine sich derart auf mindestens vier horizontal von einem Fahrstuhl-Bodenrahmen auskragenden Biegeträgern abstützt, dass diese Biegeträger eine lastproportionale Durchbiegung erfahren. Die Durchbiegung jedes einzelnen Biegeträgers wird mittels Dehnungsmessstreifen erfasst. Alle Dehnungsmessstreifen bilden gemeinsam eine Messbrücke, die ein lastproportionales Analogsignal an die Aufzugsteuerung liefert.

Die beschriebene Lastmesseinrichtung hat einige Nachteile. Gemessen wird die gesamte Gewichtskraft von Kabine und Nutzlast, was generell die Genauigkeit der Nutzlasterfassung reduziert. Das Messprinzip erfordert vier mit je einem oder zwei Dehnungsmesstreifen ausgerüstete Biegeträger, wobei die mechanischen Toleranzen der Biegeträger sowie die Widerstandstoleranzen und Anbringungstoleranzen der Dehnungsmesstreifen derart eng zu begrenzen sind, dass alle vier Biegungs-Sensoren bei gleichen Belastungen gleiche Widerstandswerte aufweisen. Alle vier oder acht Dehnungsmessstreifen sind einzeln mit einer zentralen Auswertungsschaltung zu verbinden, was erheblichen Aufwand verursacht. Ausserdem sind die vier Krafteinleitestellen zwischen dem Boden der Aufzugskabine und den Biegeträgern bei Montage vertikal so zu justieren, dass eine akzeptable Kraftverteilung gewährleistet ist.

Aufgabe der vorliegenden Erfindung ist die Schaffung einer einfachen und kostengünstigen Lastmesseinrichtung für Lastaufnahmemittel von Aufzügen, die, auch bei extrem exzentrisch angeordneten Lasten, nur einen einzigen Sensor benötigt, die Anwendung unterschiedlichster Sensorprinzipien erlaubt, ohne Einbusse an Genauigkeit auf einer relativ verwindungsweichen Unterlage, z. B. auf einem Fahrstuhl-Bodenrahmen, abgestützt werden kann, und die im Wesentlichen nur die Nutzlast ohne das Gewicht der Fahrstuhlkabine erfasst.

Die Lösung der gestellten Aufgabe ist wiedergegeben im Patentanspruch 1 hinsichtlich ihrer wesentlichsten Merkmale und in den folgenden Patentansprüchen hinsichtlich weiterer vorteilhafter Ausbildungen.

Hauptvorteil der erfindungsgemässen Lastmesseinrichtung ist, dass mit einfachen mechanischen Mitteln erreicht wird, dass alle irgendwo auf den Boden des Lastaufnahmemittels wirkenden Gewichtskräfte sich messtechnisch korrekt als Biegemoment auf einen einzigen Biegeträger, die Quertraverse des Lastmesselements, auswirken, was die Erfassung der Last mittels eines einzigen Biegungs-Sensors ermöglicht. Für den Einbau eines solchen Sensors ist, im Gegensatz zur Lösung gemäss dem zitierten Stand der Technik, viel Einbauraum vorhanden, was die Anwendung von handelsüblichen Biegungs-Sensoren nach einer Vielzahl von Sensorprinzipien erlaubt. Ausserdem wird durch die vorgeschlagene Lastmesseinrichtung im Wesentlichen nur die Nutzlast, ohne das Gewicht der Fahrstuhlkabine, gemessen, was sich in erhöhter Genauigkeit und verbesserter Auflösung auswirkt.

Bei Lastaufnahmemitteln für grössere Lasten ist es vorteilhaft, die Torsionselemente wie auch die Quertraverse des Lastmesselements aus Vierkant- oder Rechteckrohren herzustellen, da diese bei geringem Gewicht grosse Torsions- und Biegesteifigkeit aufweisen und dank ebenen Aussenflächen für Verbindungen untereinander sowie mit anderen Elementen besonders geeignet sind.

In einer für höhere Messgenauigkeit bevorzugten Ausführungsform der Erfindung sind die linienförmigen Elemente der Torsionselemente als im Wesentlichen V-förmige Kanten ausgeführt.

Um die als Biegeträger wirkende Quertraverse von grossen Biegemomenten zu entlasten, können die unteren und/oder oberen linienförmigen Elemente als Biegefedern ausgebildet sein, die einen Teil der aus den Gewichtskräften resultierenden Momente in den Torsionselementen kompensieren. Diese Lösung kann mit Vorteil dann angewandt werden, wenn ein Standard-Biegeträger-Messelement mit geringem zulässigem Biegemoment als Quertraverse zum Einsatz kommt.

Mit Vorteil weist das Lastmesselement einen im Wesentlichen H-förmigen Grundriss auf. Um besonderere Einbauverhältnisse zu berücksichtigen, ist es jedoch messtechnisch problemlos möglich, den Quersteg des H, die Quertraverse mit dem biegungserfassenden Sensor, extrem ausserhalb der Mitte der Torsionselemente anzuordnen.

Eine besonders einfache Ausführung des Lastmesselements wird erreicht, wenn für die beiden Torsionselemente Rechteckoder Vierkantrohre verwendet werden, wobei diese gegensinnig etwas um ihre Längsachse gedreht eingebaut sind, so dass ihre Seitenflächen um einen gewissen Winkel α von der Horizontalen oder Vertikalen abweichen. Damit wird errreicht, dass zwei Längskanten der Rechteck- oder Vierkantrohre direkt als untere und obere linienförmige Elemente genutzt werden können.

Für Lastaufnahmemittel mit geringerer zulässiger Nutzlast kann das im Wesentlichen H-förmige Lastmesselement, bestehend aus zwei Torsionselementen und einer Quertraverse, vorteilhaft durch Schneiden oder Stanzen und Umformen aus einem einzigen ebenen Stahl- oder Aluminiumblech genügender Stärke hergestellt werden.

Ein besonders kostengünstiges Lastmesselement ergibt sich, wenn dieses, wie vorstehen beschrieben, aus einem einzigen ursprünglich ebenen Blech besteht, bei dem die Torsionselemente in deren Erstreckungsrichtung derart mit geraden Biegungen versehen sind, dass deren Biegekanten untere und obere linienförmige Elemente bilden.

In einer weiteren vorteilhaften Ausführung des Lastmesselements aus einem einzigen Blech werden die unteren und oberen linienförmigen Elemente durch Einprägen von durchgehenden oder unterbrochenen Sicken in das im Wesentlich ebene Blech erzeugt.

Mit einfachsten Mitteln, d. h. ohne Einsatz von Schneidemaschinen, Stanz- oder Biegepressen lässt sich ein Lastmesselement herstellen, bei dem die Torsionselemente wie auch die Quertraverse aus plattenförmigen Stäben bestehen, die miteinander in H-Anordnung verschraubt, vernietet oder verschweisst sind. Die erforderlichen unteren und oberen linienförmigen Elemente an den Torsionselementen bestehen aus an diesen durchgehend oder in Einzelstücken befestigten, Flach-, Vierkant- oder Rundstäben. Fixierelemente, beispielsweise Fixierstifte, zwischen den Torsionselementen und dem Bodenrahmen des Lastaufnahmemittels halten die Lastmesseinrichtung auf dem Bodenrahmen in Position.

Anhand der beigefügten Zeichnungen wird die Erfindung in mehreren Ausführungsbeispielen näher beschrieben.

Es zeigen:
- Fig. 1a: ein erstes Ausführungsbeispiel einer in einen Aufzugs-Fahrstuhl eingebauten erfindungsgemässen Lastmesseinrichtung,
- Fig. 1b: das Lastmesselement des Ausführungsbeispiels gemäss Fig. 1a in der Draufsicht,
- Fig. 1c: Details von Fig. 1b im Schnitt,
- Fig. 1d: eine Variante zu Fig. 1c,
- Fig. 2: ein zweites Ausführungsbeispiel des Lastmesselements der erfindungsgemässen Lastmesseinrichtung,
- Fig. 3a: ein drittes Ausführungsbeispiel des Lastmesselements der erfindungsgemässen Lastmesseinrichtung in der Draufsicht,
- Fig. 3b: einen Schnitt durch das Ausführungsbeispiel gemäss Fig. 3a,
- Fig. 3c: einen Schnitt durch das Ausführungsbeispiel gemäss Fig. 3a mit veränderten Details,
- Fig. 4: einen Ausschnitt aus einem vierten Ausführungsbeispiel der Lastmesseinrichtung,
- Fig. 5: eine Lastmesseinrichtung gemäss Fig. 4, jedoch mit einer Variante des Durchbiegungs-Messprinzips.

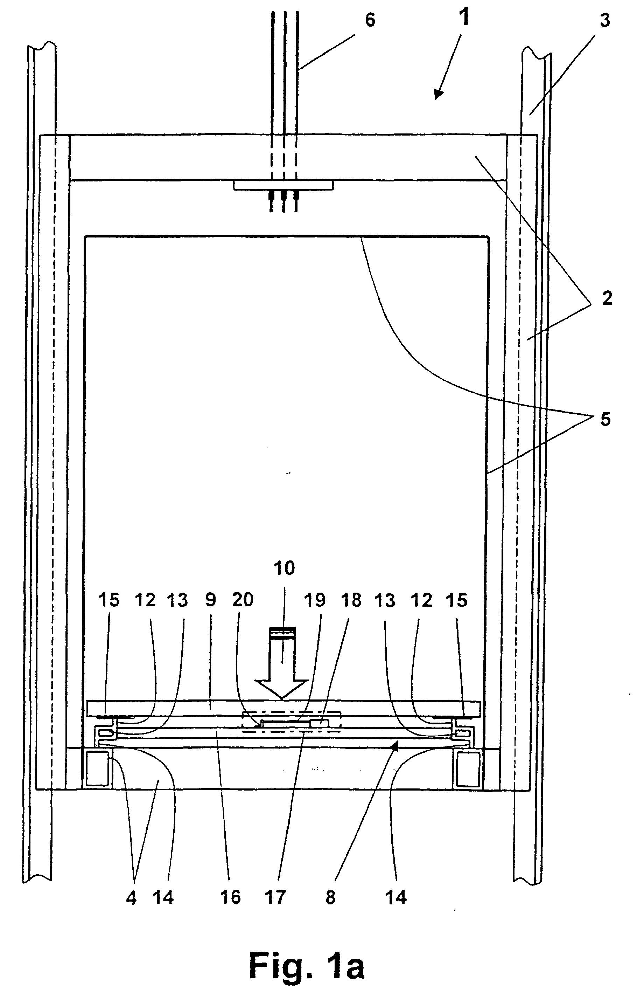

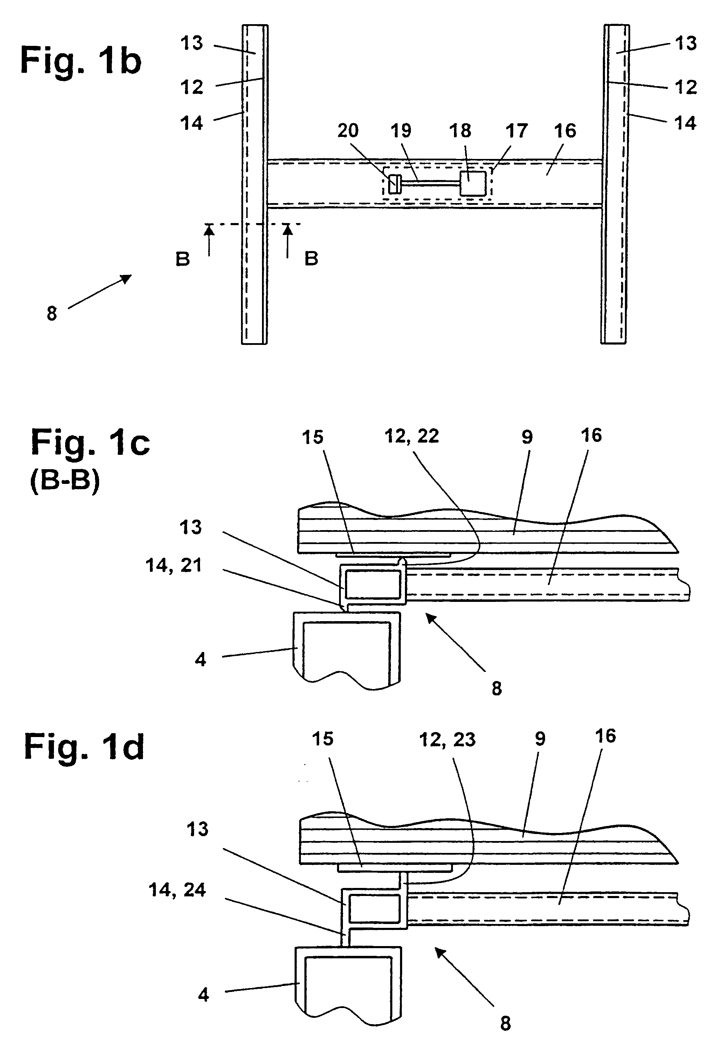

Fig. 1a bis 1d zeigen eine erste Ausführungsform der erfindungsgemässen Lastmesseinrichtung. Fig. 1a ist ein Vertikalschnitt durch einen Aufzugs-Fahrstuhl 1, der diese Lastmesseinrichtung enthält. Mit 2 ist ein Fahrstuhlrahmen bezeichnet, der an Führungsschienen 3 geführt ist und einen Bodenrahmen 4 trägt. Aufgebaut auf dem Bodenrahmen 4 ist eine Fahrstuhlkabine 5. Angedeutet sind auch Tragseile 6, durch welche der Fahrstuhl getragen und vertikal bewegt wird.
Abgestützt auf den Bodenrahmen 4 erkennt man ein Lastmesselement 8, das in Fig. 1b in einer Draufsicht ergänzend dargestellt ist. Ein durch die Last 10 belasteter Boden 9, der den Fahrstuhlboden bildet, stützt sich auf zwei obere Stege 12, die je mit einem als Torsionselement dienenden Rechteckrohr 13 verbunden sind, wobei diese Rechteckrohre 13 und die Stege 12 sich im Wesentlichen über die gesamte Tiefe des Bodens 9 erstrecken. Die Rechteckrohre 13 tragen je einen unteren Steg 14, der zum oberen Steg 12 parallel verläuft, jedoch um etwa die Rechteckrohrbreite gegenüber diesem horizontal versetzt ist. Untere und obere Stege 12, 14 bilden für die Funktion des Lastmesselements 8 wichtige linienförmige Elemente. Sie können als Profileinheit mit den Rechteckrohren 13 hergestellt oder an diese angeschweisst oder sonstwie befestigt sein.
Die unteren Stege 14 stützen sich auf einem zur Fahrstuhlkonstruktion gehörenden Bodenrahmen 4 ab, der im nichtbeschränkenden Sinne als aus Rechteckrohren bestehend dargestellt ist. Die beiden zueinander parallel verlaufenden, Torsionselemente bildenden Rechteckrohre 13 des Lastmesselements 8, sind durch ein weiteres, als Quertraverse dienendes Rechteckrohr 16 in einer H-förmigen Anordnung, beispielsweise durch Schweissen, miteinander verbunden. Der vorzugsweise aus Schichtholz oder als Aluminium-Wabenkonstruktion hergestellte Boden 9 ist mindestens im Bereich der oberen Stege 12 mit Schutzplatten 15 versehen; selbstverständlich kann auch die ganze Unterseite des Boden 9 aus solch einer Schutzplatte 15 bestehen.
Auf dem als Quertraverse dienenden Rechteckrohr 16 ist ein Biegungs-Sensor 17 angebracht, der, basierend auf einem von mehreren möglichen bekannten Messprinzipien, die Grösse des dieses Rechteckrohr 16 belastenden Biegemoments erfasst und ein entsprechendes Signal an die Aufzugsteuerung erzeugt. Anwendbar sind handelsübliche Sensoren, wie beispielsweise Schwingsaiten-Sensoren, Dehnungsmesstreifen oder opto-elektronische Distanz- oder Winkelsensoren. In Fig. 1 enthält der Biegungs-Sensor 17 einen Schwingsaiten-Sensor 18, in den ein Stab 19 mündet, welcher wiederum an einem Befestigungselement 20 momentenfrei befestigt ist. Beim Belasten des Bodens 9 werden durch die Krafteinleitung über die gegeneinander seitlich versetzten Paare von Stegen 12, 14 in den als Torsionselemente dienenden Rechteckrohren 13 Drehmomente erzeugt, die in der Quertraverse 16 ein Biegemoment und somit deren Durchbiegung bewirken. Dies wiederum verkürzt die Distanz zwischen dem Befestigungselement 20 und dem Schwingsaiten-Sensor 18. Mit dieser Verkürzung ist auch eine Kraft verbunden. Somit kann sowohl diese Verkürzung als auch die Kraft gemessen werden.
Es ist im Sinne der Erfindung, den Biegungs-Sensor 17 alternativ auf der Unterseite des als Quertraverse dienenden Rechteckrohrs 16 anzubringen. Im falle der Anwendung eines Schwingsaiten-Sensors 18 überträgt dann der Stab 19 eine Zugkraft auf diesen.
Ebenso können die Stege 12, 14 dergestalt vertauscht werden, dass die oberen Stege 12 aussen, die unteren Stege 14 innen an den als Torsionselemente dienenden Rechteckrohren 13 angebracht sind. Das die Quertraverse bildende Rechteckrohr 16 wird dann durch die auf den Boden 9 wirkende Belastung nach oben gebogen. Der aus den Rechteckrohren 13 und 16 sowie den als linienförmige Elemente wirkenden Stegen 12, 14 bestehende Körper bildet als ganzes das Lastmesselement 8.

Fig. 1c stellt einen (vergrösserten) Schnitt B-B durch das Lastmesselement 8 gemäss Fig. 1b dar und zeigt eine Ausführungsvariante, bei der die oberen und unteren Stege 12, 14 so ausgebildet sind, dass sie dort, wo sie die Schutzplatten 15 bzw. den Bodenrahmen 4 berühren, mit abgeschrägten oder V-förmigen Stegkanten 21, 22 versehen sind. Damit wird eine definierte Lage der linienförmigen Elemente für die Einleitung der Kräfte in das Lastmesselement und somit eine verbesserte Lastmessgenauigkeit erreicht.

In einer zweiten Variante gemäss Fig. 1d sind die Stege 12, 14 als Biegefedern 23, 24 ausgebildet. Deren Verbindung sowohl mit den Schutzplatten 15 als auch mit dem Bodenrahmen 4 ist vorzugsweise durch Schrauben hergestellt. Die Darstellung gemäss Fig. 1d lässt die Art der Befestigung , die dem Fachmann bestens vertraut ist, offen. Der Hauptteil des durch die Gewichtskräfte in den Torsionselementen erzeugten Drehmoments wird hier durch Biegemomente in den als Biegefedern 23, 24 ausgebildeten Stegen 12, 14 kompensiert. Das die Quertraverse bildende Rechteckrohr 16 dient dann mehr als Anzeigevorrichtung für die Durchbiegung und kann elastisch weich ausgeführt sein.
In einer weiteren, nicht dargestellten Variante sind beispielsweise nur die unteren Stege 14 als Biegefedern 24 ausgebildet und entsprechend befestigt. Die oberen Stege tragen Stegkanten 22. Selbstverständlich lassen sich die Begriffe "unten" und "oben" in diesem Zusammenhang vertauschen.
Sowohl die Stegkanten 21, 22 als auch die Biegefedern 23, 24 können sich über die ganze Tiefe des Lastmesselementes 8 erstrecken oder aber unterbrochen sein, so dass die Kraftoder Momenteneinleitung nur über einen - allenfalls kleinen - Teil der Länge der Stege 12, 14 erfolgt.
Sowohl die Stegkanten 21, 22 als auch die Biegefedern 23, 24 werden im Sinne des Erfindungsgedankens als linienförmige Elemente zur Einleitung der zu messenden Gewichtskräfte in die Torsionselemente des Lastmesselements 8 verstanden.

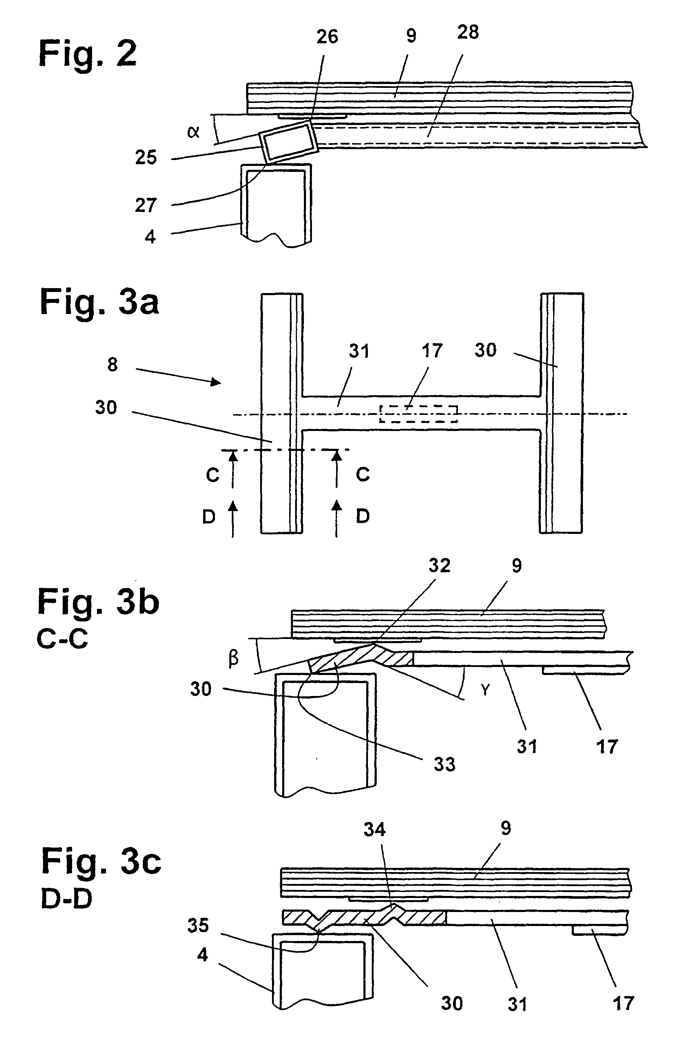

Fig. 2 zeigt eine Variante zum Ausführungsbeispiel von Fig. 1. Dargestellt ist nur der Teil, der in Fig. 1a die linke Seite der Figur ausmacht. Als Torsionselemente dienende Rechteckrohre 25 sind so angeordnet, dass ihre Seitenflächen gegenüber der Horizontalen oder Vertikalen um einen Winkel α verdreht sind. Dadurch wirken die Kräfte, die vom Boden 9 und vom Bodenrahmen 4 auf das Lastmesselement 8 ausgeübt werden, auf zwei einander diagonal gegenüberliegende, die linienförmigen Elemente bildende obere und untere Rohrkanten 26, 27 der Rechteckrohre 25. Damit wird auch hier in den als Torsionselemente dienenden Rechteckrohren 25 ein Drehmoment erzeugt, das durch ein Biegemoment in dem die Quertraverse bildenden Rechteckrohr 28 kompensiert wird.
Der dieses Biegemoment erfassende Sensor und die mit ihm verbundenen Elemente sind in Fig. 2 weggelassen. Der Grundriss von Fig. 2 entspricht im wesentlichen jenem von Fig. 1.

Ein drittes Ausführungsprinzip ist Gegenstand von Fig. 3a, 3b und 3c. Fig. 3a ist eine Draufsicht auf ein erfindungsgemässes Lastmesselement 8, das aus einem einzigen Stück Blech von ausreichender Stärke durch Schneiden oder Stanzen und Biegen hergestellt ist. Es weist die für das erfindungsgemässe Lastmesselement 8 charakteristischen zwei parallelen Torsionselemente in Form von mit Längsbiegungen versehenen Blechprofilen 30 und eine Quertraverse in Form eines ebenen Blechstreifens 31 auf, welche H-förmig angeordnet sind, wobei der Blechstreifen 31 mit einem hier nicht näher definierten Biegungs-Sensor 17 bestückt ist.
Fig. 3b zeigt einen Teilschnitt C-C durch das Lastmesselement 8 gemäss Fig. 3a. Der Boden 9 und der Bodenrahmen 4 des Lastaufnahmemittels sind auf das Funktionale reduziert dargestellt.

Die beiden Blechprofile 30 sind, beispielsweise durch Biegen, so verformt, dass je zwei sich in deren Längsrichtung erstreckende, gegenüber der Ebene des die Quertraverse bildenden Blechstreifens 31 um die Winkel β und γ verdrehte Ebenen vorliegen, dergestalt, dass die als Torsionselemente wirkenden Blechprofile 30 je eine innen liegende obere Biegekante 32 und eine aussen liegende untere Biegekante 33 aufweisen, die als obere und untere linienförmige Elemente dienen. Die Begriffe "oben" und "unten" können auch hier vertauscht werden; der Drehsinn der Winkel β und γ ist dann umgekehrt.
Auch hier werden die durch die auf den Boden 9 wirkende Last in den Blechprofilen 30 erzeugten Drehmomente durch ein Biegemoment im Blechstreifen 31 kompensiert. Deren Durchbiegung wird in bekannter Weise durch einen hier nicht näher definierten Biegungs-Sensor 17 gemessen.

Fig. 3c zeigt als Schnitt D-D eine weitere Ausführungsmöglichkeit der als Torsionselemente dienenden Blechprofile 30 des in Fig. 3a dargestellten Lastmesselements 8. Linienförmige Elemente sind hier in Form von oberen und unteren Sicken 34, 35 mittels Presswerkzeugen erzeugt. Mit 17 ist wiederum ein auf dem die Quertraverse bildenden Blechstreifen 31 befestigter, hier nicht näher definierter Biegungs-Sensor angedeutet.

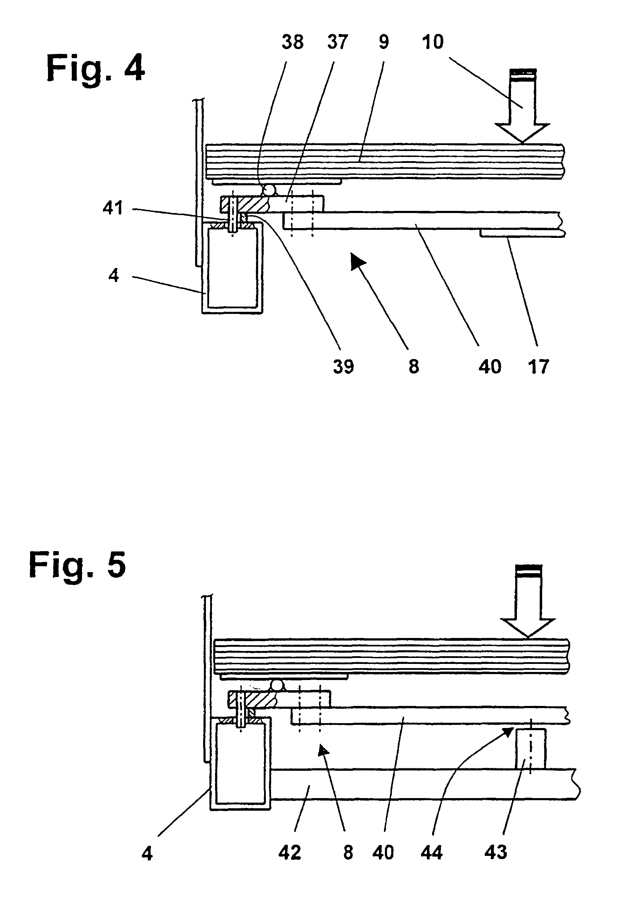

In Fig. 4 ist eine Variante der erfindungsgemässen Lastmesseinrichtung dargestellt, die sich dadurch auszeichnet, dass ihre Herstellung mit einfachsten Hilfsmitteln aus problemlos erhältlichen Rohmaterialien erfolgen kann. Als Torsionselemente wirken hier Flachprofile 37. Mittels Schweissen oder Schrauben an diesen Flachprofilen 37 befestigte Rundprofile 38 und Rechteckprofile 39 bilden hier die oberen und unteren, gegenseitig horizontal distanzierten linienförmigen Elemente. Wie sich von selbst versteht, können diese linienförmigen Elemente auch durch verschiedenste andere Profile gebildet sein, deren Querschnitte eine linienförmige Berührung zwischen dem Lastmesselement 8 und dem durch die Last 10 belasteten Boden 9 sowie zwischen dem Lastmesselement 8 und dem Bodenrahmen 4 bewirken. Als Quertraverse dient bei dieser Ausführung ein weiteres Flachprofil 40, das mit den die Torsionselemente bildenden zwei Flachprofilen 37 beispielsweise durch Schrauben oder Schweissen verbunden ist. Auf der Ober- oder Unterseite dieses Flachprofils 40 ist wiederum ein hier nicht näher definierter Biegungs-Sensor 17 angebracht. Dargestellt ist auch eine mit Stiften 41 realisierte Fixierung des Lastmesselements 8 gegenüber dem Bodenrahmen 4, wobei diese Stifte 41 in Fixierlöchern des Bodenrahmens stecken, deren Durchmesser etwas grösser als derjenige der Sifte ist, um die erforderliche minimale Beweglichkeit des Lastmesselements 8 nicht zu behindern. Diese Beweglichkeit könnte auch mittels Einbau von elastischen Hülsen zwischen den Stiften 41 und den Fixierlöchern im Bodenrahmen 4 gewährleistet werden.

Fig. 5 zeigt eine letzte Variante der erfindungsgemässen Lastmesseinrichtung, bei der das Lastmesselement 8 demjenigen der in Fig. 4 beschriebenen Ausführung entspricht, wobei die Erfassung der Durchbiegung des als Quertraverse dienenden Flachprofils 40 jedoch nicht durch einen auf diesem Flachprofil angebrachten Sensor erfolgt. Bei dieser Lösung wird die Grösse dieser Durchbiegung mittels eines über einen starren Hilfsträger 42 mit dem Bodenrahmen 4 fest verbundenen Induktiv-oder Kapazitiv-Distanz-Sensors 43 erfasst, der ein elektrisches Signal erzeugt, das den lastabhängig variierenden Abstand 44 zwischen sich und dem am stärksten durchgebogenen mittleren Bereich des Flachprofils 40 repräsentiert.

Für alle vorangehenden Ausführungsbeispiele gilt, dass die als Quertraverse dienenden Elemente 16, 28, 31, 40 aus ihrer mittig dargestellten Lage verschoben angebracht sein können, bis - im Extremfall - das Wägeelement U-förmig wird. Damit ist der Ausdruck "H-förmig" nicht auf einen symmetrischen Aspekt beschränkt.

## Patentansprüche

1. Lastmesseinrichtung eines Lastaufnahmemittels (1) eines Aufzugs, bei der die auf den Boden (9) des Lastaufnahmemittels (1) wirkende Last die Durchbiegung mindestens eines elastischen Elements bewirkt, wobei mindestens ein Biegungs-Sensor (17) diese Durchbiegung erfasst und ein lastabhängiges Signal erzeugt,
**dadurch gekennzeichnet,**
**dass** zwei Torsionselemente (13, 25, 30, 37) vorhanden sind, die sich auf einem Bodenrahmen (4) des Lastaufnahmemittels (1) abstützen und dessen Boden (9) tragen,
**dass** die beiden Torsionselemente (13, 25, 30, 37) parallel zueinander angeordnet sind, sich in etwa über die eine Abmessung des Bodens (9) erstrecken, um etwa die andere Abmessung des Bodens (9) horizontal voneinander distanziert und durch eine, das elastische Element bildende Quertraverse (16, 28, 31, 40) miteinander verbunden sind,
**dass** jedes der Torsionselemente (13, 25, 30, 37) je ein oberes und ein unteres, horizontal voneinander distanziertes, zum Torsionselement parallel verlaufendes linienförmiges Element (12, 14, 21-24, 26, 27, 32-35, 38, 39) aufweist, über die Gewichtskräfte vom Boden (9) auf das Torsionselement (13, 25, 30, 37) und von diesem auf den Bodenrahmen (4) übertragen werden, wodurch in den Torsionselementen (13, 25, 30, 37) Drehmomente und in der Quertraverse (16, 28, 31, 40) ein Biegemoment erzeugt werden, und
**dass** ein Biegungs-Sensor (17) die Grösse dieses Biegemoments erfasst.

2. Lastmesseinrichtung nach Patentanspruch 1, **dadurch gekennzeichnet, dass** der Biegungs-Sensor (17) ein Schwingsaiten-Sensor (18), ein Dehnungsmesstreifen-Sensor, ein optoelektrischer Winkel- oder Distanz-Sensor oder ein Induktiv-oder Kapazitiv-Distanz-Sensor (43) ist.

3. Lastmesseinrichtung nach Patentanspruch 1 oder 2, **dadurch gekennzeichnet, dass** die Torsionselemente (13, 25, 30, 37) und/oder die Quertraverse (16, 28, 31) des Lastmesselements (8) aus Vierkant- oder Rechteckrohren bestehen.

4. Lastmesseinrichtung nach Patentanspruch 1, 2 oder 3, **dadurch gekennzeichnet, dass** die linienförmigen Elemente zur Einleitung der zu messenden Last in die Torsionselemente (13) des Lastmesselements (8) obere und untere im Wesentlichen V-förmige Profilkanten (15,14) sind, über welche die Gewichtskräfte momentenfrei in die Torsionselemente (13) eingeleitet werden, wobei der Boden (9) auf den oberen Kanten (15) der Torsionselemente (13) und diese Torsionselemente (13) mit ihren unteren Kanten (14) auf dem Bodenrahmen (4) aufliegen.

5. Lastmesseinrichtung nach Patentanspruch 1, 2 oder 3, **dadurch gekennzeichnet, dass** die unteren und/oder oberen linienförmigen Elemente zur Einleitung der zu messenden Gewichtskräfte in die Torsionselemente des Lastmesselements (8) obere und/oder untere Biegefedern (23,24) bilden, welche einen Teil der Biegemomente aufnehmen, wobei die Biegefedern bildenden linienförmigen Elemente jeweils fest mit dem Boden (9) bzw. mit dem Bodenrahmen (4) verbunden sind.

6. Lastmesseinrichtung nach einem der Patentansprüche 1 bis 5, **dadurch gekennzeichnet, dass** das Lastmesselement (8) im Wesentlichen H-förmigen Grundriss aufweist, wobei die den Quersteg des H bildende Quertraverse (16, 28, 31, 40) auch ausserhalb der Mitte der Torsionselemente (13, 25, 30, 37) angeordnet sein kann.

7. Lastmesseinrichtung, nach Patentanspruch 6, **dadurch gekennzeichnet, dass** zwei die Torsionselemente bildenden Vierkantrohre (25) gegenüber der Ebene des die Quertraverse bildenden Rechteckrohrs (28) gegensinnig um einen Winkel α geneigt sind, wodurch die Kanten (26, 27) der Vierkantrohre die oberen und unteren linienförmigen Elemente bilden.

8. Lastmesseinrichtung nach Patentanspruch 6, **dadurch gekennzeichnet, dass** das im Wesentlichen H-förmige Lastmesselement (8) aus einem einzigen, im Wesentlichen ebenen Blech hergestellt ist, das durch Schneiden oder Stanzen und Umformen bearbeitet ist.

9. Lastmesseinrichtung nach Patentanspruch 8, **dadurch gekennzeichnet, dass** im Bereich der Torsionselemente (30) in deren Erstreckungsrichtung gerade Biegungen so angebracht sind, dass die Biegekanten dieser Biegungen untere und obere linienförmige Elemente (32, 33) bilden.

10. Lastmesseinrichtung nach Patentanspruch 8, **dadurch gekennzeichnet, dass** die unteren und oberen linienförmigen Elemente an den Torsionselementen (30) des Lastmesselements (8) aus in das ebene Blech eingepresste Sicken (34, 35) bestehen.

11. Lastmesseinrichtung nach Patentanspruch 6, **dadurch gekennzeichnet, dass** die Torsionselemente (37) und die Quertraverse (40) des H-förmigen Lastmesselements (8) aus Flachprofil-Stäben hergestellt sind, wobei die Torsionselemente (37) mit der Quertraverse (40) lösbar oder unlösbar verbunden ist, die unteren und oberen linienförmigen Elemente in Form von an den Torsionselementen (37) über deren gesamte Länge befestigten Profilstäben (38, 39) erzeugt sind.

12. Lastmesseinrichtung nach einem der Patentansprüche 1 bis 11, **dadurch gekennzeichnet, dass** Fixierelemente (41) das Lastmesselement (8) gegenüber dem Bodenrahmen (4) mindestens in der Horizontalebene fixieren, wobei diese Fixierung spielbehaftet oder elastisch ausgeführt ist, um die erforderliche Beweglichkeit und Verformbarkeit des Lastmesselements (8) nicht zu behindern.

## Claims

1. Load measuring equipment of a load detection means (1) of a lift, in which the load acting on the base (9) of the load detection means (1) causes bending deflection of at least one elastic element, wherein at least one bending sensor (17) detects this bending deflection and generates a load-dependent signal, **characterised in that** two torsion elements (13, 15, 30, 37) are present, which are supported on a base frame (4) of the load detection means (1) and support the base (9) thereof, that the two torsion elements (13, 25, 30, 37) are arranged parallel to one another, extend approximately over the one dimension of the base (9), are horizontally spaced apart by approximately the other dimension of the base (9) and are connected together by a crossbeam forming the resilient element (16, 28, 31, 40), that each of the torsion elements (13, 25, 30, 37) comprises respective upper and lower horizontally spaced-apart linear elements (12, 14, 21-24, 26, 27, 32-35, 38, 39) which extend parallel to the torsion element and by way of which weight forces are transmitted from the base (9) to the torsion element (13, 25, 30, 37) and from this to the base frame (4), whereby torsional moments are produced in the torsion elements (13, 25, 30, 37) and a bending moment in the crossbeam (16, 28, 31, 40), and that a bending sensor (17) detects the magnitude of this bending moment.

2. Load measuring equipment according to patent claim 1, **characterised in that** the bending sensor (17) is an oscillation string sensor (18), a strain gauge strip sensor, an opto-electrical angle or distance sensor or an inductive or a capacitive distance sensor (43).

3. Load measuring equipment according to patent claim 1 or 2, **characterised in that** the torsion elements (13, 25, 30, 37) and/or the crossbeams (16, 28, 31) of the load measuring element (8) consist of square or rectangular tubes.

4. Load measuring equipment according to patent claim 1, 2 or 3, **characterised in that** the linear elements for introduction of the load to be measured into the torsion elements (13) of the load measuring element (8) are upper and lower substantially V-shaped profile edges (15, 14), by way of which the weight forces are introduced free of moment into the torsion elements (18), wherein the base (9) bears on the upper edges (15) of the torsion elements (13) and these torsion elements (13) bear by their lower edges (14) on the base frame (4).

5. Load measuring equipment according to patent claim 1, 2 or 3, **characterised in that** the lower and/or upper linear elements for introduction of the weight forces to be measured into the torsion elements of the load measuring element (6) form upper and/or lower bending springs (23, 24) which receive a part of the bending moment, wherein linear elements forming the bending springs are respectively fixedly connected with the base (9) and with the base frame (4).

6. Load measuring equipment according to one of patent claims 1 to 5, **characterised in that** the load measuring element (8) has a substantially H-shaped profile, wherein the crossbeam (16, 28, 31, 40) forming the crossbar of the H can also be arranged outside the middle of the torsion elements (13, 25, 30, 37).

7. Load measuring equipment according to patent claim 6, **characterised in that** two square tubes (25) forming the torsion elements are inclined in opposite sense by an angle α relative to the plane of the rectangular tube (28) forming the crossbeam, whereby the edges (26, 27) of the square tube form the upper and lower linear elements.

8. Load measuring equipment according to patent claim 6, **characterised in that** the substantially H-shaped load measuring element (8) is produced from a single substantially flat metal sheet which is processed by cutting or punching and shaping.

9. Load measuring equipment according to patent claim 8, **characterised in that** straight bends are so formed in the region of the torsion elements (30) in the length direction thereof that the bending edges of these bends form lower and upper linear elements (32, 33).

10. Load measuring equipment according to patent claim 8, **characterised in that** the lower and upper linear elements of the torsion elements (30) of the load measuring element (8) consist of ridges (34, 35) pressed into the flat sheet metal.

11. Load measuring equipment according to patent claim 6, **characterised in that** the torsion elements (37) and the crossbeam (40) of the H-shaped load measuring element (8) are produced from flat profile rods, wherein the torsion element (37) is detachably or non-detachably connected with the crossbeam (40), and the lower and upper linear elements are produced in the form of profile rods (38, 39) fastened to the torsion elements (37) over the entire length thereof.

12. Load measuring equipment according to one of patent claims 1 to 11, **characterised in that** fixing elements (41) of the load measuring element (8) are fixed relative to the base frame (4) at least in the horizontal plane, wherein this fixing is executed to be liable to play or resilient so as not to inhibit the required movability and deformability of the load measuring element (8).

## Revendications

1. Dispositif de mesure de charge d'un élément de suspension de charge (1) d'un ascenseur, lors duquel la charge agissant sur le plancher 9 de l'élément de suspension de charge (1) cause la flexion d'au moins d'un élément élastique, auquel cas au moins un détecteur de courbure (17) saisit cette flexion et produit un signal dépendant de la charge,
**caractérisé par le fait que**
que deux éléments de torsion (13, 25, 30, 37) sont disponibles qui s'appuient à un châssis de plancher 4 de l'élément de suspension de charge (1) et dont ils portent leur plancher (9),
que les deux éléments de torsion (13, 25, 30, 37) sont disposés parallèlement les uns par rapport aux autres, lesquels s'étendent approximativement au-dessus d'une étendue du plancher (9), autour approximativement de l'autre étendue du plancher (9) distancié horizontalement l'un de l'autre et sont relié ensemble par une traverse transversale (16, 28, 31, 40) formant l'élément élastique,
que chacun des éléments de torsion (13, 25, 30, 37) présente respectivement un élément en forme de ligne supérieur et inférieur (12, 14, 21-24, 26, 27, 32-35, 38, 39) distanciés horizontalement l'un de l'autre et passant parallèlement par rapport à l'élément de torsion, qui sont transférés, grâce au poids, du plancher (9) à l'élément de torsion (13, 25, 30, 37) et à partir de ce celui-ci sur le châssis de plancher 4, grâce à quoi sont produits des moments de torsion dans les éléments de torsion (13, 25, 30, 37) et un moment de flexion dans la traverse transversale (16, 28, 31, 40) et
qu'un détecteur de courbure (17) saisit la dimension de ce moment de flexion.

2. Dispositif de mesure de charge selon la revendication 1, **caractérisé par le fait que** le détecteur de courbure (17) est un détecteur d'oscillation de corde (18), un détecteur de jauges d'allongement, un détecteur d'angulation optoélectronique ou un détecteur de distance optoélectroniques ou un détecteur de distance inductive ou un détecteur de distance capacitive (43).

3. Dispositif de mesure de charge selon la revendication 1 ou 2, **caractérisé par le fait que** les éléments de torsion (13, 25, 30, 37) et/ou la traverse transversale (16, 28, 31) de l'élément de mesure de charge (8) se compose de tubes carré ou rectangulaires.

4. Dispositif de mesure de charge selon la revendication 1, 2 ou 3 **caractérisé par le fait que** les éléments en forme de ligne pour l'introduction de la charge à mesurer dans les éléments de torsion (13) de l'élément de mesure de charge (8) sont des bords de profil supérieurs et inférieurs (15, 14) essentiellement en forme de V, par lesquels les forces du poids sont envoyées sans moment dans les éléments de torsion (13), auquel cas le plancher (9) s'appuient sur le bord supérieur (15) des éléments de torsion (13) et ces éléments de torsion (13) avec leur bord inférieur (14) s'appuient sur le châssis de plancher 4.

5. Dispositif de mesure de charge selon la revendication 1, 2 ou 3, **caractérisé par le fait que** les éléments en forme de ligne inférieurs et/ou supérieurs pour l'introduction des forces du poids à mesurer dans les éléments de torsion de l'élément de mesure de charge (8) forment des ressorts spirals supérieures et/ou inférieures (23, 24), lesquels incorporent une partie des moments de flexion, auquel cas les ressorts spirals formant des éléments en forme de ligne sont respectivement reliées fermement au plancher (9) et/ou au châssis de plancher 4.

6. Dispositif de mesure de charge selon une des revendications de 1 à 5, **caractérisé par le fait que** l'élément de mesure de charge (8) présente un tracé essentiellement en forme de H essentiel, auquel cas la traverse transversale (16, 28, 31, 40) formant l'entretoise du H peut être arrangée aussi à l'extérieur du milieu des éléments de torsion (13, 25, 30, 37).

7. Dispositif de mesure de charge selon la revendication 6, **caractérisé par le fait que** deux tubes carrés (25) formant les éléments de torsion sont pliés en sens inverse d'un angle β vis-à-vis du plan des tubes rectangulaires (28) formant la traverse transversale, grâce à quoi les bords (26, 27) des tubes carrés forment les éléments en forme de ligne supérieurs et inférieurs.

8. Dispositif de mesure de charge selon la revendication 6, **caractérisé par le fait qu'**essentiellement l'élément de mesure de charge (8) en forme de H est fabriqué en une seule tôle essentiellement plane qui est transformée par des coupes, du découpage-poinçonnage et du remaniement.

9. Dispositif de mesure de charge selon la revendication 8, **caractérisé par le fait que** dans le secteur des éléments de torsion (30) dans leur direction de projection, des courbes droites sont si installées que les bords de flexion de ces courbes forment des éléments en forme de ligne inférieurs et supérieurs (32, 33).

10. Dispositif de mesure de charge selon la revendication 8, **caractérisé par le fait que** les éléments en forme de ligne inférieurs et supérieurs aux éléments de torsion (30) de l'élément de mesure de charge (8) se composent de moulures (34, 35) enfoncés dans la tôle plane.

11. Dispositif de mesure de charge selon la revendication 6, **caractérisé par le fait que** les éléments de torsion (37) et la traverse transversale (40) de l'élément de mesure de charge (8) en forme de H sont fabriqués de barres avec un profil plat, auquel cas les éléments de torsion (37) sont reliés de façon amovible ou inamovible avec la traverse (40), les éléments en forme de ligne inférieurs et supérieurs sont produits sous forme de profils de barre (38, 39) fixés aux éléments de torsion (37) sur l'ensemble de leur longueur.

12. Dispositif de mesure de charge selon une des revendications de 1 à 11, **caractérisé par le fait que** des éléments de fixation (41) fixent l'élément de mesure de charge (8) par rapport au châssis de plancher (4) au moins dans le plan horizontal, auquel cas cette fixation est exécutée entachée de jeux ou élastiquement, pour ne pas entraver la mobilité nécessaire et l'usinabilité de l'élément de mesure de charge (8).
